(19) Europäisches Patentamt
European Patent Office
Office européen des brevets

(11) **EP 1 336 082 B1**

(12) **FASCICULE DE BREVET EUROPEEN**

(45) Date de publication et mention
de la délivrance du brevet:
**30.07.2008 Bulletin 2008/31**

(21) Numéro de dépôt: **01997678.6**

(22) Date de dépôt: **20.11.2001**

(51) Int Cl.:
**$G01D\ 5/24$** $^{(2006.01)}$

(86) Numéro de dépôt international:
**PCT/FR2001/003632**

(87) Numéro de publication internationale:
**WO 2002/042721 (30.05.2002 Gazette 2002/22)**

(54) **DISPOSITIF DE MESURE CAPACITIF**

KAPAZITIVER MESSWERTGEBER

CAPACITIVE MEASUREMENT DEVICE

(84) Etats contractants désignés:
**AT BE CH CY DE DK ES FI FR GB GR IE IT LI LU MC NL PT SE TR**

(30) Priorité: **23.11.2000 FR 0015119**
**23.11.2000 FR 0015120**
**23.11.2000 FR 0015121**
**23.11.2000 FR 0015123**
**23.11.2000 FR 0015127**

(43) Date de publication de la demande:
**20.08.2003 Bulletin 2003/34**

(73) Titulaire: **Hitachi Computer Products (Europe) S.A.S.**
**45160 Olivet (FR)**

(72) Inventeurs:
• **JORDANA, Pascal**
**F-45000 Orleans (FR)**
• **LAUNAY, Claude**
**F-94500 Champigny (FR)**
• **LE RESTE, Daniel**
**F-77164 Ferrières-en-Brie (FR)**
• **PANCIROLI, William**
**F-78660 Prunay-en-Yvelines (FR)**
• **DA SILVA, Joaquim**
**F-45100 Orleans La Source (FR)**
• **PARBAUD, Philippe**
**F-45240 La Ferte-St-Aubin (FR)**

(74) Mandataire: **Texier, Christian et al**
**Cabinet Régimbeau**
**20, rue de Chazelles**
**75847 Paris Cedex 17 (FR)**

(56) Documents cités:
**WO-A-00/05593**     **FR-A- 2 785 046**

• **HUANG S M ET AL: "TOMOGRAPHIC IMAGING OF TWO-COMPONENT FLOW USING CAPACITANCE SENSORS" JOURNAL OF PHYSICS E. SCIENTIFIC INSTRUMENTS, IOP PUBLISHING, BRISTOL, GB, vol. 22, no. 3, 1 mars 1989 (1989-03-01), pages 173-177, XP000209343 ISSN: 0022-3735**

**EP 1 336 082 B1**

**Description**

La présente invention concerne le domaine des capteurs.

Plus précisément, la présente invention concerne un dispositif de mesure exploitant une mesure indirecte de permittivité entre deux corps électriquement conducteurs formant respectivement une sonde de mesure et un élément de référence, par exemple une sonde de référence.

On a décrit dans le document WO-0025098 un dispositif dont la structure de base est schématisée sur la figure 1 annexée.

Ce dispositif comprend deux corps électriquement conducteurs constituant respectivement une sonde de mesure 10 et une sonde de référence 20, des moyens d'alimentation électrique 30 aptes à délivrer une tension électrique continue d'amplitude contrôlée, un étage intégrateur 50 comprenant un système à commutation de capacité 53 et des moyens de commande 40 adaptés pour définir cycliquement, à une fréquence contrôlée, une suite de deux séquences :

- une première séquence T1 cours de laquelle les moyens d'alimentation électrique 30 sont reliés à la sonde de mesure 10 pour appliquer un champ électrique entre la sonde de mesure 10 et la sonde de référence 20 et accumuler des charges électriques sur la sonde de mesure 10,
- puis une seconde séquence T2 au cours de laquelle les moyens d'alimentation électrique 30 sont déconnectés de la sonde de mesure 10 et celle-ci est reliée à un point de sommation de l'étage intégrateur 50 pour transférer des charges dans l'étage intégrateur 50 et obtenir en sortie de celui-ci un signal représentatif de la permittivité existant entre la sonde de mesure 10 et la sonde de référence 20.

Plus précisément encore, selon le document WO-0025098, l'étage intégrateur 50 comprend un amplificateur opérationnel 51 , un premier condensateur d'intégration 52 monté en contre-réaction sur cet amplificateur 51 et un second condensateur 53 commuté entre la sortie et l'entrée de l'amplificateur opérationnel 51 au rythme des séquences pilotées par les moyens de commande 40, de sorte que, en régime d'équilibre établi, on obtient en sortie de l'amplificateur opérationnel 51, une tension d'équilibre égale à -E.Cs/C53, relation dans laquelle -E désigne l'amplitude de la tension aux bornes des moyens d'alimentation électrique 30 et Cs et C53 désignent respectivement les valeurs des capacités définies entre la sonde de mesure 10 et la sonde de référence 20 d'une part, et le second condensateur commuté 53 d'autre part.

La commutation des moyens d'alimentation électrique 30 et du second condensateur 53 est assurée par des interrupteurs inverseurs 42, 43 pilotés par une base de temps 41.

Le fonctionnement de ce dispositif connu est essentiellement le suivant.

Supposons qu'à l'origine le condensateur d'intégration C52, le condensateur de commutation C53 et le condensateur Cs formé entre la sonde de mesure 10 et la sonde de référence 20 soient chacun totalement déchargés, soit

QC52 = 0

QC53 = 0, et

QCs=0.

Lors de la première séquence T1, le condensateur Cs est chargé sous la tension d'alimentation délivrée par le module 30, que l'on suppose ici égale à -E.

A la fin de la séquence T1, on a donc :

QCs = -E.Cs

QC52 = 0

QC53 = 0.

Au cours de la séquence T2 suivante, les charges sont transférées de Cs vers C52 ; soit, les charges étant conservées et Cs et C53 étant reliés à l'entrée inverseuse de l'amplificateur opérationnel 51 d'impédance virtuelle nulle :
-E.Cs = Vs2.C52, en appelant Vs2 la tension de sortie de l'amplificateur opérationnel 51 pendant la séquence T2.

Au cours de la séquence T1 suivante, les deux condensateurs C52 et C53 sont placés en parallèle. On a alors :

$$Vs = Vs2.C52 / (C52 + C53)$$

$$= QC53 / C53 = QC52 / C52,$$

soit

$$QC53 = [Vs2.C52/(C52+C53)].C53$$
$$= [Vs2 /(1+C53/C52).C53$$

soit si

$$C52 = nC53 \gg C53$$

$$QC53 \simeq Vs2.C53.$$

A la séquence suivante T2, les charges contenues dans C53 viennent en opposition de celles Cs. La partie restante des charges de Cs est transférée dans C52, etc ...

La tension de sortie Vs, en sortie de l'amplificateur opérationnel 51 croît progressivement jusqu'à une tension Vs équilibre = QC53/C53 telle que

$$QC53 = Vs\ équilibre.C53 = -E.Cs.$$

Ainsi après x itérations le dispositif atteint un régime d'équilibre sur le point de sommation. Les charges QC53 de C53 viennent compenser les charges de la sonde Cs.

Dès qu'une variation de capacité Cs est détectée, le supplément (ou la perte) de charges sur Cs vient charger (ou décharger) la capacité C52.

Ainsi en régime établi la capacité de commutation C53 vient équilibrer les variations de charges de la sonde Cs.

On connaît également d'autres dispositifs de mesure basés sur la mesure de la permittivité existante entre une sonde de mesure et une sonde de référence.

C'est par exemple le cas dans les documents suivants:

-    FR 2 785 046 (D1), notamment pour une application à la mesure de niveaux de produits liquides dans des réservoirs ;
-    Huang SM & al. (D2): « tomographic imaging of two-component flow using capacitance sensors », J. of Physics E. Scientific Instruments, IOP Publishing, Bristol, vol. 22 (3), 01 mars 1989, pages 173-177, XP000209343 ISSN: 0022-3735, pour la reconstitution d'une image d'un écoulement fluide dans une canalisation; et
-    WO 00/05593 (D3), pour une application à la détection de mouvements.

La présente invention a maintenant pour but de proposer un nouveau dispositif présentant des performances supérieures à celles des dispositifs connus.

Plus précisément encore, la présente invention a pour but de compenser les dérives éventuelles dues par exemple, à la température, à l'humidité, ou encore à des perturbations électriques basses fréquences générées par couplage capacitif, dans les dispositifs antérieurs connus.

Ce but est atteint dans le cadre de la présente invention grâce à un dispositif tel que décrit dans la revendication 1.

Selon une autre caractéristique avantageuse de la présente invention, le dispositif comprend deux têtes de mesure et les signaux appliqués à l'étage différenciateur proviennent respectivement de la sortie des étages intégrateurs de ces deux têtes de mesure.

Selon une autre caractéristique avantageuse de la présente invention, les deux sondes de mesure appartenant respectivement aux deux têtes de mesure précitées sont situées dans une étroite proximité et dans un même milieu.

Selon une autre caractéristique avantageuse de la présente invention, en option le dispositif peut comprendre une tête de mesure unique et des moyens de mémorisation aptes à mémoriser le signal représentatif de la sortie de la tête de mesure pour une correction d'offset donnée et une tension d'alimentation contrôlée, afin de permettre à l'étage différenciateur de comparer ensuite le signal ainsi mémorisé avec le signal obtenu à la sortie de la tête de mesure, pour une correction d'offset similaire, mais une tension d'alimentation contrôlée différente.

Selon une autre caractéristique avantageuse de la présente invention, la correction d'offset de l'étage intégrateur est réalisée à l'aide d'un circuit comprenant un condensateur alimenté par une tension réglable.

Selon une autre caractéristique avantageuse de la présente invention, le dispositif comprend en outre des moyens aptes à asservir la correction d'offset sur le signal de sortie de l'étage intégrateur.

D'autres caractéristiques, buts et avantages de la présente invention apparaîtront à la lecture de la description détaillée qui va suivre et en regard des dessins annexés donnés à titre d'exemples non limitatifs et sur lesquels :

- la figure 1 précédemment décrite représente schématiquement un dispositif conforme à l'état de la technique divulgué dans le document WO-0025098,
- la figure 2 représente un circuit de base conforme à la présente invention comprenant des moyens de correction d'offset,
- la figure 3 représente la structure de base d'un dispositif conforme à la présente invention comprenant deux têtes de mesure,
- la figure 4 représente schématiquement un chronogramme de fonctionnement d'un dispositif conforme à la présente invention, comprenant deux têtes de mesure utilisées en différentiel,
- la figure 5 représente un chronogramme similaire de fonctionnement pour un dispositif conforme à la présente invention, comprenant une tête de mesure unique avec mémorisation de la sortie de celle-ci,
- la figure 6 représente schématiquement un asservissement de la correction d'offset réalisé dans le cadre de la présente invention,
- les figures 7 à 9 représentent schématiquement une variation brutale de capacité entre une sonde de mesure et une sonde de référence, la réponse classique obtenue avec un dispositif de mesure connu conforme au document WO-0025098, et la réponse obtenue avec un dispositif conforme à la présente invention exploitant un asservissement de la correction d'offset
- la figure 10 représente un dispositif conforme à la présente invention comprenant plusieurs têtes de mesure,
- la figure 11 représente un chronogramme de fonctionnement du dispositif conforme à la présente invention comprenant plusieurs têtes de mesure,
- les figures 12, 13 et 14 représentent schématiquement trois variantes de sonde conformes à l'invention,
- la figure 15 représente schématiquement le diagramme de détection d'une tête de mesure conforme à la présente invention selon l'amplitude de la tension d'alimentation appliquée,
- la figure 16 représente schématiquement un chronogramme du fonctionnement du dispositif conforme à la présente invention, et
- la figure 17 représente schématiquement les tensions appliquées sur la sonde de mesure, dans le cadre d'une variante de la présente invention, et les tensions de sortie correspondantes obtenues.

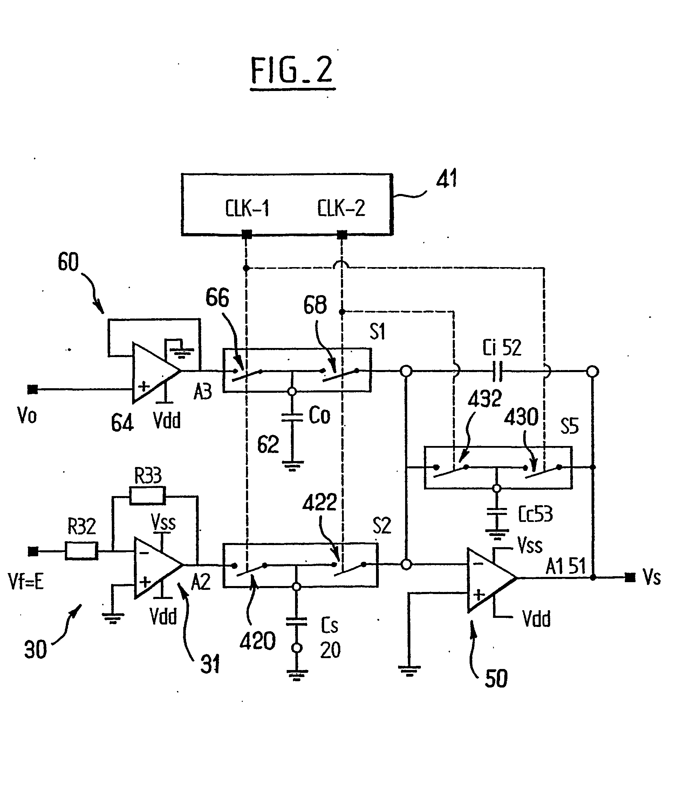

On retrouve sur la figure 2 le circuit de base de la présente invention, comprenant une sonde de mesure 10 définissant en combinaison avec un élément de référence 20, une capacité Cs, des moyens d'alimentation 30, un étage intégrateur de charge électrique 50 et une base de temps 41.

Dans le cadre de la présente invention, l'élément de référence 20 peut être formé d'une sonde de référence ou encore d'une masse constituée par exemple par la terre ou une masse métallique avoisinante, par exemple le chassis d'un véhicule automobile.

Les moyens d'alimentation électrique 30 sont ici constitués d'un étage inverseur de potentiel. Cet étage comprend un amplificateur opérationnel 31 dont l'entrée non inverseuse est reliée à la masse. L'entrée inverseuse de l'amplificateur opérationnel 31 reçoit une tension d'alimentation Vf = + E par l'intermédiaire d'une résistance R32. Une résistance de contre-réaction R33, de préférence de même valeur que R32 est montée en contre-réaction entre l'entrée inverseuse de l'amplificateur opérationnel OP31 et sa sortie.

La sortie de l'amplificateur opérationnel OP31 est appliquée séquentiellement sur la sonde de mesure 10 par l'intermédiaire d'un interrupteur 420 piloté par la base de temps 41.

La sonde de référence 20 est reliée à la masse.

La sonde de mesure 10 est par ailleurs reliée séquentiellement à l'entrée inverseuse d'un amplificateur opérationnel 51 appartenant à l'étage intégrateur 50 par l'intermédiaire d'un deuxième interrupteur 422 piloté en opposition de l'interrupteur 420 par la base de temps 41.

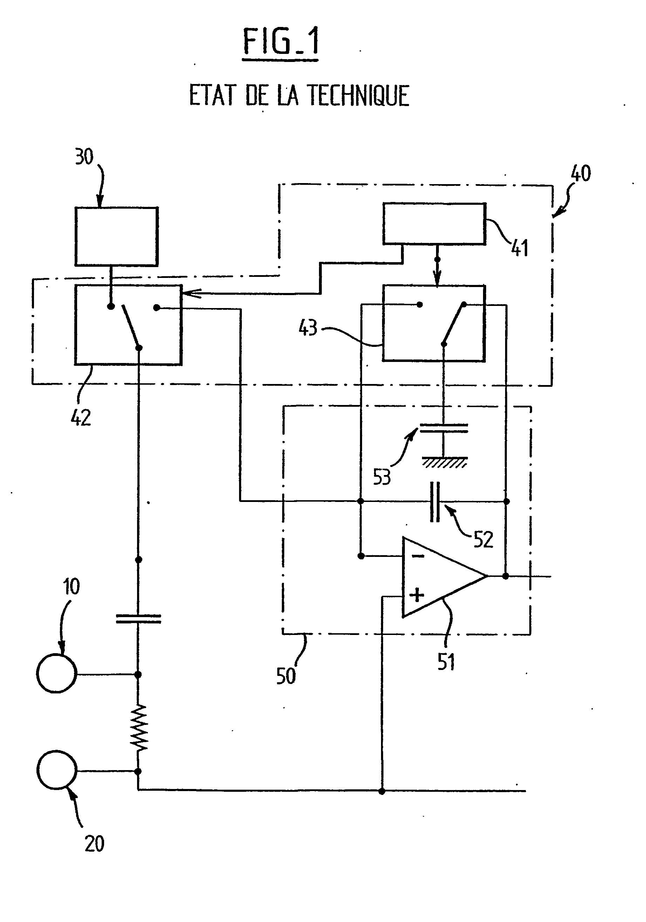

Les deux interrupteurs 420, 422 constituent l'interrupteur inverseur 42 schématisé sur la figure 1.

Sur la figure 2 on a schématisé CLK1 et CLK2, les deux signaux en opposition de phase pilotant les deux interrupteurs 420, 422.

L'entrée non inverseuse de l'amplificateur opérationnel 50 est relié à la masse.

Le condensateur d'intégration C52 est placé en contre-réaction entre l'entrée inverseuse de l'amplificateur opérationnel OP50 et sa sortie.

Le condensateur commuté 53 a une première électrode reliée à la masse.

Sa seconde électrode est reliée séquentiellement à la sortie de l'amplificateur opérationnel OP512 et à l'entrée inverseuse de celui-ci par deux interrupteurs 430, 432 pilotés en opposition de phase par les signaux CLK1 et CLK2 générés par la base de temps 41.

Les deux interrupteurs 430, 432 constituent l'interrupteur 43 schématisé sur la figure 1.

La base de temps 41 définit ainsi une séquence comprenant deux périodes de base T1, T2 :

- une période T1 pendant laquelle les interrupteurs 420 et 430 sont fermés, tandis que les interrupteurs 422 et 432 sont ouverts. Pendant cette première période la sonde de mesure 10 est chargée à la tension d'alimentation -E issue de l'étage 31, tandis que le condensateur de commutation 53 est relié à la sortie de l'étage intégrateur.
- puis la base de temps 41 définit une seconde période T2 pendant laquelle les interrupteurs 422 et 432 sont fermés, tandis que les interrupteurs 420 et 430 sont ouverts. Au cours de cette deuxième période, la sonde de mesure 10 est reliée à l'entrée inverseuse de l'amplificateur opérationnel OP51, tandis que le condensateur de commutation 53 est relié à l'entrée de l'étage intégrateur 50.

Par ailleurs le dispositif de base illustré sur la figure 2 comprend des moyens 60 aptes à assurer une correction d'offset de l'entrée de l'étage intégrateur 50.

Ces moyens de correction d'offset 60 sont adaptés pour appliquer sur l'entrée de l'étage intégrateur 50 une tension de correction compensant la tension d'offset susceptible d'être générée en entrée de l'étage intégrateur, par exemple suite à une dérive de température, à l'humidité, ou encore à des perturbations électriques basses fréquences générées par couplage capacitif.

Selon le mode de réalisation particulier illustré sur la figure 2, les moyens de correction d'offset 60 comprennent un condensateur 62 associé à un amplificateur opérationnel 64.

L'amplificateur opérationnel 64 est monté en suiveur. Il reçoit sur son entrée non inverseuse une tension d'alimentation variable V0. Son entrée inverseuse est montée en contre-réaction sur sa sortie. La sortie de l'amplificateur opérationnel OP64 est reliée séquentiellement au rythme de l'horloge CLK1, par l'intermédiaire d'un interrupteur 66, au condensateur 62. Par ailleurs, le condensateur 62 est lui-même appliqué séquentiellement au rythme de l'horloge CLK2 générée par la base de temps 41, par l'intermédiaire d'un deuxième interrupteur 68, à l'entrée de l'étage intégrateur 50, c'est-à-dire à l'entrée inverseuse de l'amplificateur opérationnel OP51.

Le dispositif illustré sur la figure 2 délivre ainsi sur la sortie de l'amplificateur opérationnel 51 de l'étage intégrateur 50 un signal de sortie Vs = (Vf.Cs/Cc)- (V0.C0/Cc), dans laquelle :

- Vf désigne la tension d'alimentation en entrée de l'étage inverseur 30 d'alimentation,
- V0 désigne la tension d'alimentation en entrée de l'étage de correction d'offset 60,
- Cs désigne la capacité définie entre la sonde de mesure 10 et la sonde de référence 20,
- C0 désigne la capacité du condensateur 62 et
- Cc désigne la capacité du condensateur de commutation 53.

Le moyen de correction d'offset 60 illustré sur la figure 2 permet d'injecter une quantité de charge Q0 = V0.C0 sur le point de sommation de l'amplificateur 51 de manière synchrone à la commutation de la capacité 53.

En ajustant la tension V0 par tout moyen approprié, par exemple un convertisseur digital analogique, on peut ramener la tension de sortie Vs pratiquement à 0.

Le dispositif ainsi formé permet de mesurer de faibles variations de la capacité Cs définie entre la sonde de mesure 10 et la sonde de référence 20, y compris avec un offset important de la sonde, sans saturer l'étage intégrateur 51.

En effet, on peut décomposer la sonde de mesure Cs en deux capacités élémentaires Cs0 et Cm,

- Cs0 désignant l'offset de la sonde due aux fils de connexion, généralement de valeur élevée, pouvant atteindre plusieurs centaines de picofarads, et
- Cm désignant la variation de la capacité virtuelle de la sonde mesurant la permittivité entre la sonde de mesure 10 et la sonde de référence 20, généralement de quelques centaines de femtofarads.

La valeur de Cs0 peut évoluer notamment en fonction de la température et du degré hygrométrique. Comme sa valeur est élevée par rapport à Cm, sa dérive est amplifiée dans le rapport $\Delta Cs0/Cc$, qui est très supérieure à la pleine échelle de la variation de Cm.

Pour éviter de fausser la mesure par saturation de l'étage d'entrée, On utilise comme mentionné précédemment, dans le cadre de la présente invention, un étage différentiel (soustracteur) 70.

Cet étage différentiel reçoit sur ses deux entrées respectives des signaux représentatifs de la sortie de tête de mesure pour une correction d'offset similaire mais des tensions d'alimentation contrôlée différentes.

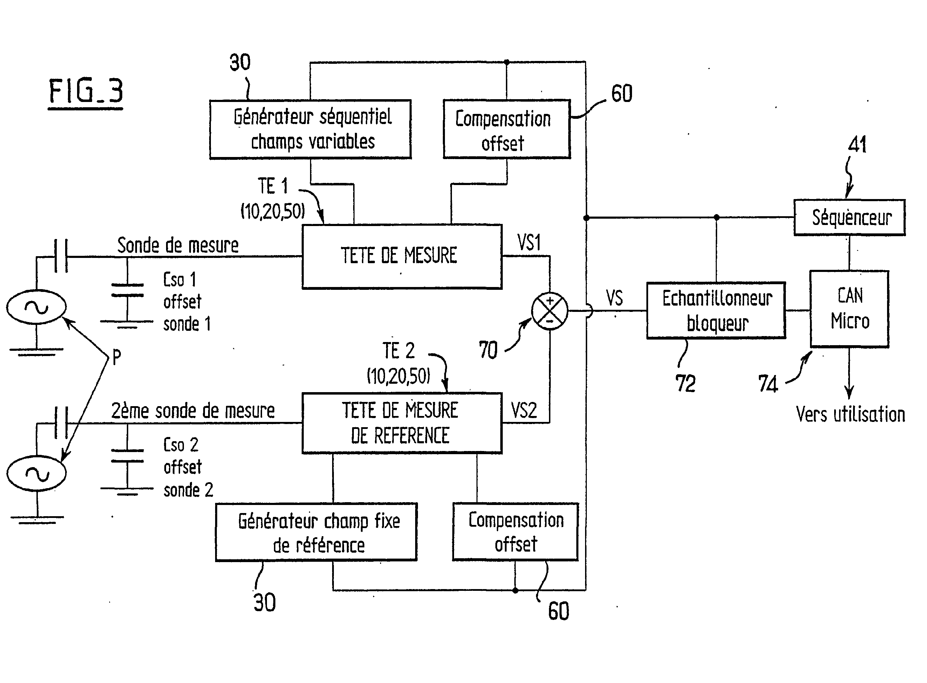

On a illustré sur la figure 3 annexée un exemple de réalisation d'un tel dispositif conforme à la présente invention comprenant un étage différentiel 70.

On retrouve sur cette figure 3 deux têtes de mesure TE1 et TE2 comprenant chacune une sonde de mesure 10 associée à un étage intégrateur 50, du type illustré sur la figure 2 précédemment décrite. Chaque sonde de mesure 10 est associée à des moyens d'alimentation électrique 30 du type illustré sur la figure 2 et des moyens de compensation d'offset 60 respectifs du type illustré sur la figure 2.

Les moyens d'alimentation 30 sont conçus pour appliquer une tension contrôlée spécifique En entre chaque sonde de mesure 10 d'une tête de mesure TE1 ou TE2 et un élément de référence 20 associé. Chaque élément de référence d'une tête TE1 ou TE2 peut être formé d'une sonde de référence spécifique, ou commune aux deux têtes, ou encore d'une masse constituée par exemple par la terre ou une masse métallique avoisinante, par exemple le chassis d'un véhicule automobile. Selon encore une autre variante l'élément de référence 20 d'une tête donnée peut être formé par la sonde de mesure 10 de l'autre tête. En particulier l'élément de référence 20 de la tête de mesure TE1 peut être formé par la sonde de mesure 10 de la tête de référence TE2.

L'étage différentiel 70 reçoit sur ses entrées respectives les signaux de sortie Vs1 et Vs2, issus des deux têtes de mesure TE1 et TE2.

L'ensemble du dispositif est piloté par la base de temps 41.

Le signal disponible à la sortie de l'étage différentiel 70 peut être exploité par tout moyen approprié, par exemple par un échantillonneur bloqueur 72 suivi d'un convertisseur analogique numérique 74 ou tout moyen d'analyse approprié, par exemple un micro-calculateur.

Sur la figure 3 on a schématisé sous les références Cso1 et Cso2 des capacités parasites dues notamment aux fils de connexion et susceptibles de générer une tension d'offset en entrée des étages intégrateurs 50 des têtes de mesure TE1 et TE2.

Par ailleurs sur la figure 3 on a schématisé sous la référence P des perturbations par couplage électrique susceptibles d'être appliquées en entrée de chaque tête de mesure TE1 et TE2.

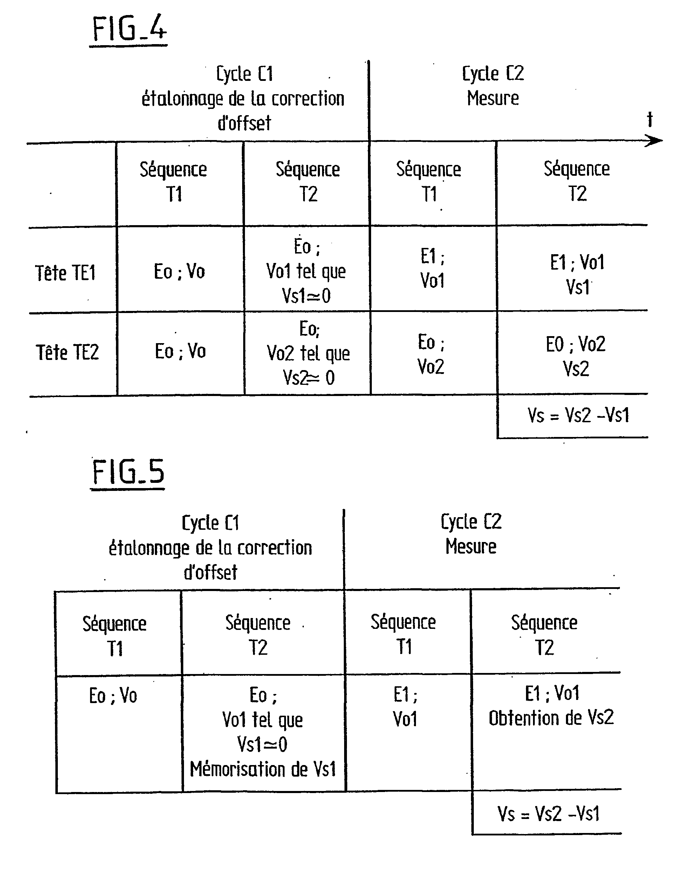

Le séquenceur 41 illustré sur la figure 3 commande un fonctionnement cyclique du dispositif comprenant principalement deux cycles successifs C1, C2, comme illustré sur la figure 4 :

Au cours d'un premier cycle C1 d'étalonnage de la correction d'offset :

Le dispositif applique sur les deux têtes TE1 et TE2 une tension d'alimentation d'entrée $Vf = E_0$ identique, de préférence faible, par exemple de 1 volt.

Pendant ce cycle C1, le contrôleur 74 ajuste la tension de correction d'offset Vo1 de la tête de mesure TE1 pour obtenir une tension de sortie Vs1 très proche de 0, par exemple de 0,1 volt.

Pendant ce même cycle C1, le contrôleur 74 ajuste la tension de correction d'offset Vo2 appliquée à la seconde tête de mesure TE2 pour obtenir une tension de sortie Vs2 également très proche de 0, par exemple de 0,1 volt.

Pendant ce premier cycle C1, l'étage différentiel 70 délivre une tension de sortie Vs = Vs1 - Vs2 très proche de 0, égale à une tension Vs.ref prise comme référence.

Pendant le deuxième cycle C2 consécutif (de mesure), le contrôleur 74 applique sur la tête de mesure TE1 la même tension de correction d'offset Vo1 que définie à la fin du premier cycle, mais une tension d'alimentation $Vf = E_1$ différente, par exemple de 5 volts.

Pendant le deuxième cycle C2, le contrôleur 74 applique sur la deuxième tête de mesure TE2, servant de tête de mesure de référence, la même tension de correction d'offset Vo2 et la même tension d'alimentation $Vf = E_0$ définie à l'issue du premier cycle C1.

Si des dérives, dues par exemple à la température ou au degré hygrométrique apparaissent, elles sont présentes sur les sondes des deux têtes de mesure TE1 et TE2 en raison de la proximité de celles-ci et de leur similitude de milieu ambiant. La mesure étant faite en différentiel grâce à l'étage 70, on obtient en sortie de celui-ci une tension Vs qui s'affranchit des dérives dues éventuellement à Cso1 et Cso2, soit :

$$Vsn = E1(Cso1/Cc - Cso2/Cc) - (Co/Cc)(Vo1 - Vo2) + (En - E1)(Cm/cc)$$

Si les deux sondes des têtes de mesure TE1 et TE2 sont suffisamment proches l'une de l'autre et si les deux cycles sont très rapprochés dans le temps, par exemple à une fréquence de 50 KHz, le bruit de mode commun par couplage capacitif est également éliminé.

Le dispositif illustré sur la figure 3 travaillant en différentiel comporte deux têtes de mesures TE1, TE2.

Selon une variante de réalisation conforme à la présente invention, on peut procéder à une mesure différentielle, afin de maximiser le rapport signal / bruit, avec une tête de mesure unique. Pour cela le dispositif doit comprendre un moyen de mémorisation apte à mémoriser l'amplitude du signal de sortie de la tête de mesure pour une correction d'offset et une tension d'alimentation contrôlée donnée, afin de comparer ultérieurement ce signal avec le signal obtenu à la sortie de la tête mesure pour la même correction d'offset, mais une tension contrôlée différente.

Dans une telle variante un moyen comparable au contrôleur 74 définit deux cycles C1, C2, comme illustré sur la figure 5 :

Dans un premier cycle C1 (d'étalonnage de la correction d'offset) on applique un champ électrique connu faible $E_0$, par exemple de 0 volt, sur la sonde de mesure 10 et l'on mémorise le signal de sortie Vs1 obtenu pour une correction d'offset donnée Vo1, lequel signal de sortie Vs1 correspond au bruit.

Cette tension de sortie Vs1 correspondant au bruit est mémorisée.

Dans un deuxième cycle C2 (de mesure) on applique un champ électrique de travail $E_1$, avec la même correction d'offset Vo1, pour obtenir un signal de sortie Vs2.

Si les deux mesures sont suffisamment rapprochées dans le temps, le bruit ambiant n'a pas évolué entre deux cycles.

Il suffit alors de procéder par différenciation entre le signal Vs1 mémorisé à la fin du premier cycle C1 et le signal Vs2 obtenu au cours du deuxième cycle C2, pour obtenir un résultat de mesure débarrassé du bruit.

Les deux cycles C1, C2 précités sont réitérés successivement tout au cours de l'utilisation du dispositif.

Que le dispositif exploite deux têtes de mesure TE1 et TE2 comme illustré sur la figure 3, ou une tête de mesure unique avec mémorisation d'un signal Vs1, chacun des cycles C1, C2 précités comprend lui-même au moins deux séquences T1, T2 successives, telles que décrites précédemment, comme on l'a illustré sur les figues 4 et 5.

Bien évidemment, les chronogrammes illustrés sur les figures 4 et 5 peuvent connaître de nombreuses variantes.

En premier lieu par exemple, le cycle d'étalonnage C1 peut comporter plusieurs suites de couples de séquence T1, T2, si nécessaire, pour ajuster les corrections d'offset, avant de procéder à un cycle de mesure C2.

Par ailleurs, on peut prévoir une alternance régulière d'un cycle C1 d'étalonnage de la correction d'offset et d'un cycle C2 de mesure, ou encore un cycle C1 d'étalonnage, périodique, pour plusieurs cycles de mesure C2 consécutifs.

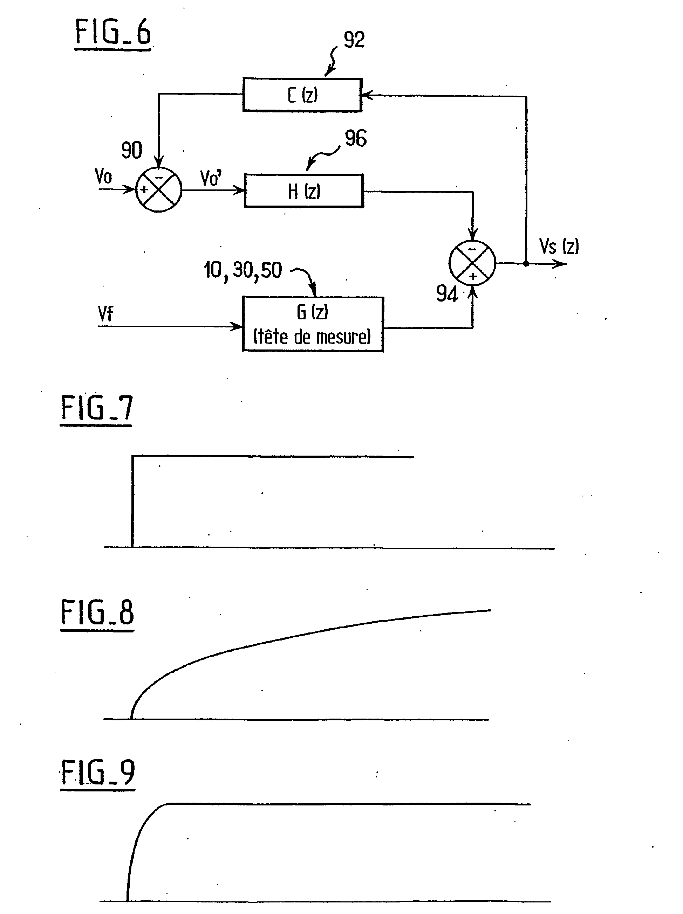

On a schématisé sur la figure 6, un dispositif conforme à la présente invention, dans lequel la tension de correction d'offset est asservie sur la tension de sortie de l'étage intégrateur.

Le schéma fonctionnel illustré sur la figure 6 comprend une tête de mesure (formée par la sonde 10, les moyens d'alimentation 30 recevant une tension d'entrée Vf et l'étage intégrateur 50) présentant une fonction de transfert G(z), un premier étage différentiateur (soustracteur) 90 qui reçoit une tension de correction d'offset Vo d'une part et d'autre part la tension Vs de sortie du dispositif, par l'intermédiaire d'une cellule 92 ayant une fonction de transfert C(z) et un deuxième étage différentiateur (soustracteur) 94 qui reçoit d'une part la sortie de la tête de mesure et d'autre part la sortie Vo' du premier étage différentiateur 90, par l'intermédiaire d'une cellule 96 ayant une fonction de transfert H(z).

On a :

$$H(z) = Co \, / \, [\, C52 + (C53 - C52).z^{-1}]$$

$$G(z) = Cs \, / \, [\, C52 + (C53 - C52).z^{-1}]$$

et

$$Vs(z) = Vf(z).G(z) - Vo'(z).H(z)$$

soit

$$Vs(z) = Vf(z).G(z) - [\, Vo - Vs(z) \, .C(z)]\, H(z).$$

De là on obtient :

$$C(z) = C52 \, / \, Co.$$

Ainsi il apparaît que la stabilité et le temps de réponse du système ne dépendent que du rapport C52/Co. Il suffit donc de choisir judicieusement ce rapport (le plus grand possible) pour obtenir un temps de réponse minimal, tout en conservant le terme d'intégration (qui dépend de C52), ce qui permet d'obtenir un rapport signal sur bruit correct.

On remarquera en particulier que la présente invention qui opère l'asservissement sur la tension de correction d'offset Vo, améliore la stabilité du système par rapport à un asservissement qui serait opéré sur la tension d'entrée Vf. En effet ainsi la stabilité du système ne dépend que de ci et Co et en particulier ne dépend pas de Cs (capacité virtuelle de la sonde 10 qui est variable).

On a illustré sur la figure 7 la variation brutale de capacité Cs, sous forme d'une marche, entre la sonde de mesure 10 et un élément de référence 20.

Un dispositif classique, conforme à l'état de la technique illustré sur la figure 1 et tel que décrit dans le document WO-0025098 donne une réponse lente du type illustré sur la figure 8.

Par contre le dispostif conforme à la présente invention, exploitant un asservissement de la correction d'offset sur le signal de sortie Vs, permet d'obtenir une réponse rapide du type illustré sur la figure 9.

L'homme de l'art appréciera que le dispositif conforme à la présente invention permet d'atteindre beaucoup plus rapidement que le dispositif antérieur connu, une valeur de sortie représentative de la valeur réelle de la capacité définie entre la sonde de mesure 10 et l'élément de référence 20.

La présente invention permet un temps de convergence inférieur à 1 ms en choisissant correctement Ci et Co.

Un temps de réponse très court est appréciable dans de nombreuses applications. On citera par exemple, et non limitativement, le domaine de la détection en vue de la commande de coussins gonflables de sécurité. Dans ce domaine en particulier, il est en effet très important de disposer d'un temps de réponse très court, typiquement inférieur à 10 ms.

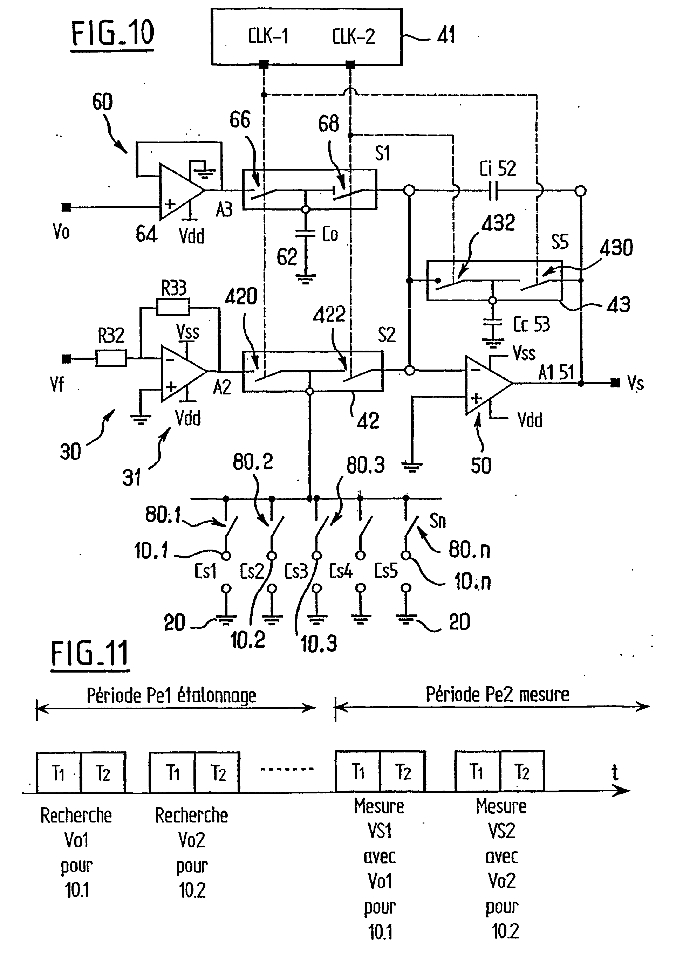

On aperçoit sur la figure 10 un circuit conforme à la présente invention, comprenant une série de sondes de mesure référencées 10.1 à 10.n définissant en coopération avec un élément de référence 20, une capacité respective Cs1, Cs2 ... Csn, associée à des moyens d'alimentation 30, un étage intégrateur de charge électrique 50 et une base de temps 41.

Chaque sonde de mesure 10 peut être associée à un élément de référence distinct respectif 20. En variante un élément de référence 20 peut être commun à plusieurs sondes de mesure 10, voire à la totalité de celles-ci.

Les moyens d'alimentation 30, l'étage intégrateur 50 et la base de temps 41 sont avantageusement conformes aux dispositions définies précédemment en regard de la figure 2.

Comme on le voit sur la figure 10, dans le cadre de la présente invention, les sondes de mesure 10.1 à 10.n sont reliées successivement, par l'intermédiaire d'interrupteurs 80.1 à 80.n cadencés par la base de temps 41, au noeud défini entre les interrupteurs 420 et 422, de sorte que ces sondes de mesure 10.1 à 10.n sont successivement reliées à la tension d'alimentation Vf pendant la période T1 et à l'entrée inverseuse de l'amplificateur opérationnel 51 pendant la période T2.

Le chronogramme de fonctionnement correspondant est illustré sur la figure 11.

On aperçoit sur cette figure 11, une première période Pe1 comprenant une suite de n paires de deux séquences T1, T2 d'étalonnage, c'est-à-dire de recherche de la tension de correction d'offset V0, pour chacune des sondes de mesure 10 et une deuxième période Pe2 comprenant également une suite de n paires de deux périodes T1, T2 de mesure pour chaque sonde de mesure 10.

Les séquences T1 et T2 sont conformes aux dispositions décrites précédemment.

Selon l'illustration donnée sur la figure 3 les périodes d'étalonnage Pe1 sont regroupées et de même les periodes Pe2 de mesure sont regroupées entre elles.

En variante, on peut prévoir d'intercaler les périodes de mesure Pe2 entre les périodes d'étalonnage Pe1.

Bien évidemment le chronogramme schématisé sur la figure 11 doit être combiné avec celui des figures 4 et 5 lorsque la présente invention exploite en combinaison, une mesure en différentiel (à base de deux têtes comme schématisé sur les figures 2 et 3, ou à base d'une seule tête et avec mémorisation comme schématisé sur la figure 4) et plusieurs sondes de mesure (comme schématisé sur la figure 10).

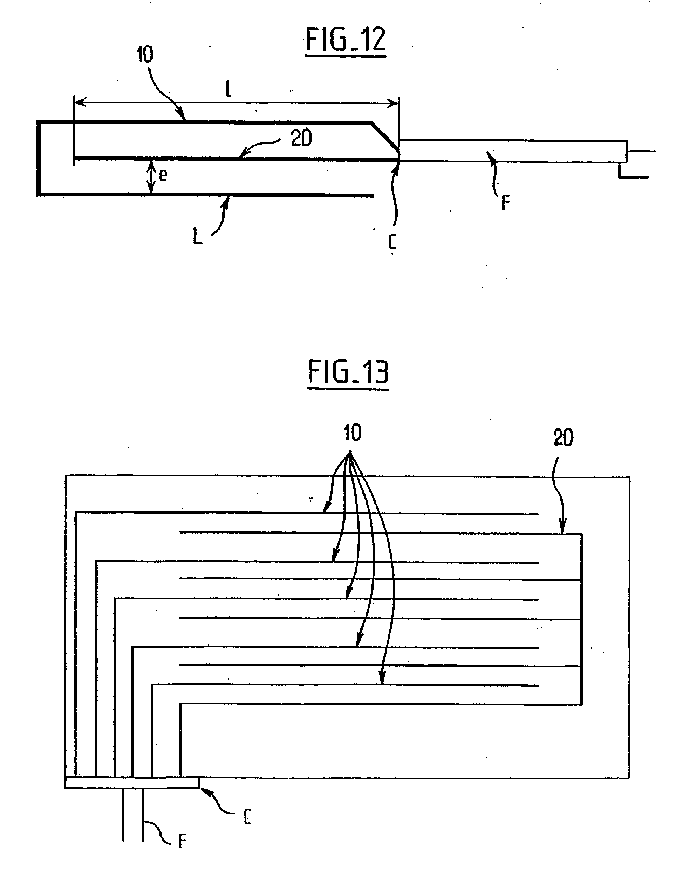

On a illustré sur la figure 12 annexée une variante de structure de sonde conforme à la présente invention, comprenant une sonde de mesure 10 de géométrie en « U » encadrant une sonde de référence 20, formée d'un brin unique.

Cette disposition permet, par rapport à un dispositif plus classique, dans lequel les deux sondes 10 et 20 sont formées de brins uniques parallèles, d'obtenir une sensibilité supérieure de l'ordre de 30 à 50 %, car elle cumule la distribution des champs entre chacun des deux éléments de la sonde de mesure 10 en « U » et la sonde de référence 20 placée entre ceux-ci.

Un avantage similaire peut être obtenu en utilisant de manière symétrique une sonde de référence 20 en « U » encadrant une sonde de mesure 10, formée d'un brin unique.

A titre d'exemple non limitatif, on peut prévoir pour les sondes 10 et 20 les caractéristique suivantes :

L = largeur des sondes 10 et 20 de l'ordre de 0,5 mm à 5 mm (bande plate ou fil),
I = longueur des sondes 10 et 20 égale à la zone à détecter,
e = espacement entre les sondes 10 et 20 de l'ordre de 5 à 40 mm dépendant de la distance de détection souhaitée,
E = épaisseur de la sonde. De l'ordre de 0,5 mm à 5 mm pour du fil. De quelques microns à 0,5 mm si la structure est en bande plate.

Les sondes 10 et 20 ont typiquement une résistivité de l'ordre de 0,1 à 100 ohm carré et sont recouvertes de préférence d'un matériau étanche à l'eau. Ce revêtement présente avantageusement une résistivité élevée ( R > 100 Mohms) et une permittivité relativement faible ( $\varepsilon r$ < 7 ).

Sur la figure 12, on a référencé C, les connections des sondes 10, 20 à un câble blindé F étanche. La sonde de mesure est connectée à l'âme du câble blindé et la sonde de référence 20 au blindage du câble blindé.

La présente invention peut également bénéficier des avantages d'une structure de sonde en U dans le cadre du système à sondes multiples, tel qu'illustré sur la figure 10.

Il suffit pour cela de conformer l'un au moins de l'élément de référence 20 et de la sonde de mesure 10, voire les deux, en U.

On a par exemple représenté sur la figure 13 un système comprenant plusieurs sondes de mesure 10 constituées chacune d'un brin unique, associées à un élément de référence commun 20 formé d'un peigne. Le peigne formant l'élément de référence est constitué de multiples éléments en U juxtaposés qui encadrent chacun un brin formant une sonde de mesure.

Sur la figure 13, on a référencé C, un connecteur assurant d'une part les connections des sondes 10 aux conducteurs d'un câble blindé F étanche multibrins et d'autre part la connection de l'élément de référence 20 au blindage de ce cable F. La sonde de mesure est connectée à l'âme du câble blindé et la sonde de référence 20 au blindage du câble blindé.

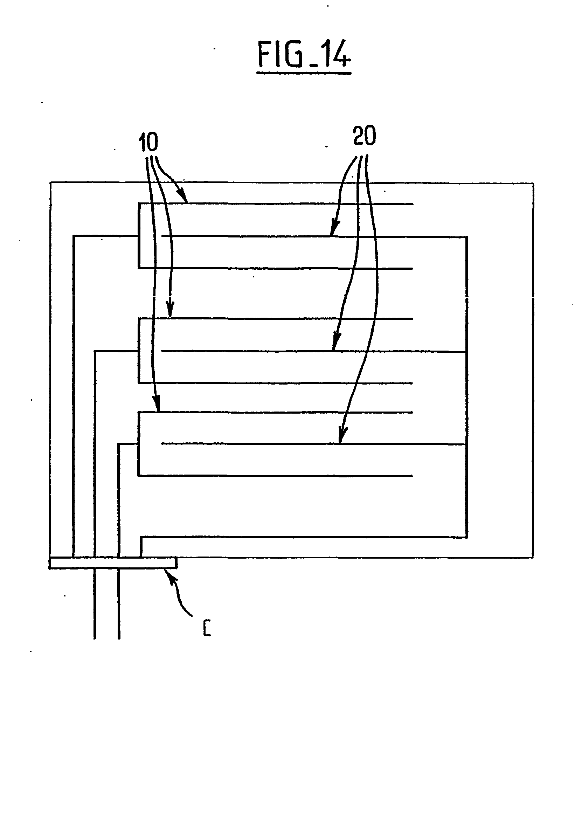

On a illustré sur la figure 14 une variante selon laquelle ce sont les sondes de mesure 10 qui possèdent une forme en U.

De telles sondes de mesure 10 et élément de référence associé 20 peuvent être prévus sur tous supports appropriés, rigide ou souple, selon l'application recherchée.

Selon l'invention, pour améliorer la dynamique de mesure, la tête de mesure peut recevoir successivement, au cours de cycles de mesure successifs, sur la sonde de mesure 10 , des tensions variables En.

Ces tensions variables En peuvent être par exemple des tensions croissant successivement de volt en volt, de 3 à 8 volts.

On évoquera néanmoins par la suite une variante selon laquelle on applique successivement deux séries de tensions respectivement de faible valeur et de forte valeur, pour permettre une discrimination entre un mode de détection proximal et un mode de détection lointain, et permettre ainsi une correction éventuelle des mesures.

A chaque cycle de mesure, on obtient en sortie de la tête de mesure, c'est-à-dire en sortie de l'intégrateur 51, une valeur Vsn correspondant à une tension d'alimentation En.

A chaque valeur de tension d'alimentation En, correspond une ligne de distribution isopotentielle qui se referme dans l'espace, par rapport à la sonde de référence 20, voire par rapport à une masse métallique avoisinante, par exemple le châssis d'un véhicule automobile, dans le cas d'une telle application, ou encore par rapport à la terre.

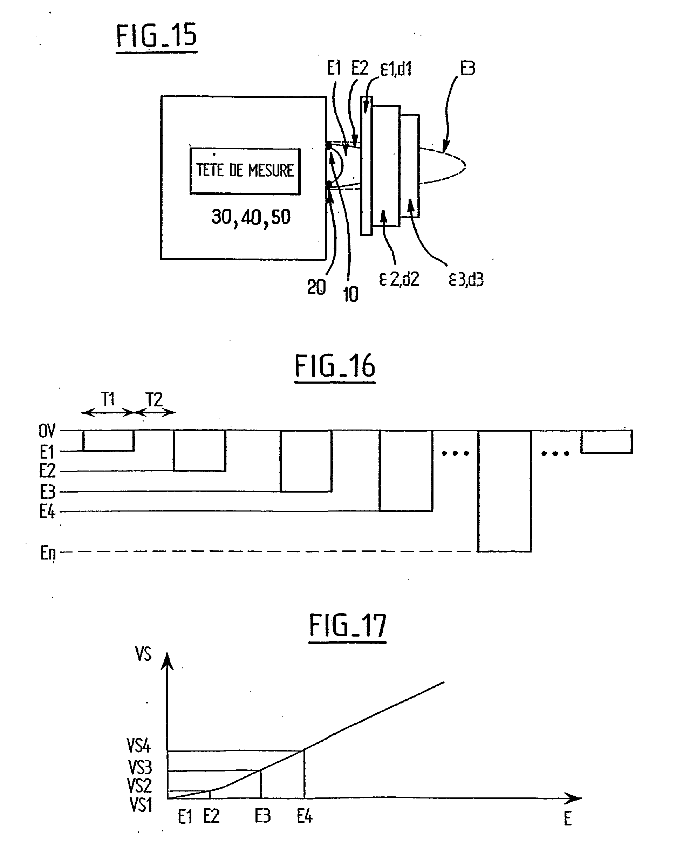

Plus la valeur de la tension d'alimentation En est grande, plus la portée de la ligne équipotentielle est grande comme on l'a illustré sur la figure 15.

L'homme de l'art comprendra que la valeur de la capacité ainsi détectée entre la sonde de mesure 10 et la sonde de référence 20 par intégration des charges électriques prélevées sur la sonde de mesure 10, dépend directement de la permittivité du milieu influençant le diagramme de détection de la tête de mesure, et bien entendu dépend de l'épaisseur de ce milieu.

A titre d'exemple non limitatif, dans le contexte de la détection d'un usager sur un siège de véhicule automobile, notamment pour autoriser ou non la mise en oeuvre d'un coussin gonflant de protection, la présente invention permet par analyse de l'évolution des signaux en sortie de l'étage intégrateur 51 de la tête de mesure de discriminer, en fonction du diagramme de détection impliqué, entre la présence d'un corps humain et un phénomène parasite apparenté, tel que la présence d'humidité sur le siège.

La permittivité relative d'un corps humain étant de l'ordre de 80 fois supérieure à la permittivité de matériaux impliqués dans la réalisation d'un siège de véhicule automobile et de son environnement, l'analyse des signaux de sortie de la tête de mesure permet en effet, de garantir la détection de présence d'une personne à proximité de la sonde de mesure 10 ainsi que de préciser sa position par rapport à celle-ci.

On a schématisé sur la figure 16, l'évolution croissante de la tension d'alimentation, par exemple entre E1, E2, E3, E4 ... pendant les périodes T1 du séquencement, les périodes T2 illustrées sur la figure 16 correspondant aux périodes de liaisons de la sonde de mesure 10 à l'entrée inverseuse de l'amplificateur opérationnel 51 et simultanément à la liaison du condensateur de commutation 53 sur cette même entrée inverseuse. Bien évidemment, à la fin du cycle de croissance de E1 à En, un cycle similaire de mesure est réitéré.

Comme indiqué précédemment, selon une variante de la présente invention, on applique successivement sur la sonde de mesure 10, deux séries de tensions respectivement de faible valeur et de forte valeur, par exemple deux tensions E1 et E2 de faible valeur pour une détection en mode proximal et deux tensions E3 et E4 de forte valeur pour une détection en mode lointain, comme schématisé sur la figure 17.

Un tel processus permet notamment de tenir compte de la présence de certains corps ou milieux perturbateurs, proches de la sonde de mesure 10, dans la détection de corps plus éloignés.

A chaque valeur de En correspond une valeur Vsn qui est mémorisée.

On obtient donc une série de couples de valeurs Vsn/En.

A partir de ces données, les moyens d'analyse du dispositif peuvent calculer de manière indirecte la valeur de la capacité virtuelle définie entre la sonde de mesure 10 et l'élément de référence 20, respectivement en mode proximal, soit Cspro, et en mode lointain, soit Csloi.

La capacité virtuelle détectée en mode lointain Csloi, peut être déterminée par la relation :

$$Csloi = Cc \cdot K1 = Cc (Vs4 - Vs3) / (E4 - E3)$$

dans laquelle Cc désigne la capacité du condensateur de commutation 53.

Cette capacité Csloi traduit par exemple, dans le cas de la détection d'un usager dans un siège de véhicule automobile, la distance de l'usager au siège.

De même la capacité virtuelle détectée en mode proximal Cspro, peut être déterminée par la relation :

$$Cspro = Cc \cdot K2 = Cc (Vs2 - Vs1) / (E2 - E1).$$

Cette capacité Cspro traduit par exemple, dans le cas d'une utilisation pour la détection d'un usager dans un siège de véhicule, la présence éventuel d'un obstacle ou corps perturbateur, tel qu'un tapis de billes ou une serviette, entre l'usager et le siège.

Dans ce dernier cas (c'est à dire la présence d'un obstacle), la valeur Csloi est affectée et minorée.

On peut corriger l'erreur résultante dans la distance exprimée pour l'usager, en corrigeant la valeur obtenue pour Csloi, sur la base de la valeur obtenue pour Cspro.

Différents moyens de correction peuvent utilisés.

Selon un mode de réalisation avantageux, on calcule le rapport K1/K2, et si ce rapport est supérieur à 1, on calcule une valeur corrigée de Csloi, soit Csloimod sur la base de la relation :

$$Csloimod = Csloi \cdot K = Csloi \cdot (K1/K2).$$

La valeur Csloimod ainsi corrigée donne une bonne approximation de la distance de l'usager intervenant dans la définition de Vs3 et Vs4 sous E3 et E4.

Bien évidemment le chronogramme schématisé sur la figure 16 doit être combiné avec celui celui de la figure 11 et/ou celui des figures 4 et 5 lorsque la présente invention exploite en combinaison, des tensions d'alimentation variable et une mesure en différentiel (à base de deux têtes comme schématisé sur les figures 2 et 3, ou à base d'une seule tête et avec mémorisation comme schématisé sur la figure 4) et/ou plusieurs sondes de mesure (comme schématisé sur la figure 10).

Bien entendu la présente invention n'est pas limitée aux modes de réalisation particuliers qui viennent d'être décrits mais s'étend à toute variante sans s'écarter de la formulation des revendications.

La présente invention peut concerner un grand nombre d'applications. On a évoqué précédemment la détection de présence d'un usager sur un siège de véhicule automobile, notamment pour la commande d'un système de coussin gonflable de sécurité. Mais la présente invention n'est pas limitée à cette application particulière. La présente invention peut par exemple concerner également, entre autres, les domaines de détection anti-intrusion ou encore les détecteurs de niveau de fluide.

**Revendications**

**1.** Dispositif de mesure, exploitant une mesure indirecte de la permittivité entre deux corps électriquement conducteurs (10, 20), comprenant au moins deux têtes de mesure comportant chacune au moins une sonde de mesure (10) et au mains un élément de référence (20), le dispositif comprenant des moyens (30) aptes à appliquer séquentiellement une tension d'alimentation contrôlée entre la sonde de mesure (10) et l'élément de référence (20) et des moyens (50) aptes à intégrer les charges électriques accumulées sur la sonde de mesure (10), **caractérisé par le fait qu'**il comprend en outre des moyens (60) aptes à appliquer une charge électrique (Q0) réglable en entrée des moyens intégrateur (50) et un étage différenciateur (70) recevant sur ses entrées respectives des signaux représentatifs des sorties respectives (Vs1, Vs2) des têtes de mesure, pour une application d'une charge électrique (Q0) similaire en entrée de leurs moyens d'intégration (50) respectifs, mais des tensions d'alimentation contrôlée, entre la sonde de mesure (10) et l'élément de référence (20), différentes.

2. Dispositif selon la revendication 1 **caractérisé par le fait qu'**il comprend deux corps électriquement conducteurs constituant respectivement une sonde de mesure (10) et un élément de référence (20), des moyens d'alimentation électrique (30) aptes à délivrer une tension électrique continue d'amplitude contrôlée, un étage intégrateur (50) comprenant un système à commutation de capacité (53) et des moyens de commande (40) adaptés pour définir cycliquement, à une fréquence contrôlée, une suite de deux séquences (T1, T2) : une première séquence au cours de laquelle les moyens d'alimentation électrique (30) sont reliés à la sonde de mesure (10) pour appliquer un champ électrique entre la sonde de mesure (10) et l'élément de référence (20) et accumuler des charges électriques sur la sonde de mesure (10), puis une seconde séquence au cours de laquelle les moyens d'alimentation électrique (30) sont déconnectés de la sonde de mesure (10) et celle-ci est reliée à un point de sommation de l'étage intégrateur (50) pour transférer des charges dans l'étage intégrateur (50) et obtenir en sortie de celui-ci un signal représentatif de la permittivité existant entre la sonde de mesure (10) et l'élément de référence (20) l'étage intégrateur (50) comprenant en outre un amplificateur opérationnel (51), un premier condensateur d'intégration (52) monté en contre réaction sur cet amplificateur (51) et un second condensateur (53) commuté entre la sortie et l'entrée de l'amplificateur opérationnel (51) au rythme des séquences (T1, T2) pilotées par des moyens de commande (40), de sorte que en régime d'équilibre établi, on obtienne en sortie de l'amplificateur opérationnel (51), une tension "Vs équilibre" égale à : - ECs/C53, relation dans laquelle -E désigne l'amplitude de la tension aux bornes des moyens d'alimentation électrique (30), et Cs et C53 désignent respectivement les valeurs des capacités définies entre la sonde de mesure (10) et l'élément de référence d'une part et le second condensateur commuté (53) d'autre part.

3. Dispositif selon l'une des revendications 1 ou 2 **caractérisé par le fait qu'**il comprend deux têtes de mesure (TE1 et TE2), et les signaux appliqués à l'étage différentiel (70) proviennent respectivement de la sortie des étages intégrateurs (50) de ces deux têtes de mesure.

4. Dispositif selon la revendication 3, **caractérisé par le fait que** les deux sondes de mesure sont en étroite proximité et placées dans le même milieu.

5. Dispositif selon l'une des revendications 3 ou 4, **caractérisé par le fait qu'**il comprend un contrôleur apte à appliquer un fonctionnement cyclique comprenant deux cycles successifs : un premier cycle au cours duquel les deux têtes de mesure reçoivent des tensions d'alimentation Vf similaires et la tension d'offset est corrigée, et un second cycle au cours duquel la tension d'alimentation sur l'une des têtes de mesure TE1 est modifiée, tandis que la tension d'alimentation sur la deuxième tête de mesure TE2 et les tensions d'offset précédemment obtenues sont maintenues.

6. Dispositif selon l'une des revendications 1 à 3, **caractérisé par le fait qu'**il comprend une tête de mesure unique et des moyens aptes à mémoriser le signal de sortie de la tête de mesure pour une correction d'offset et une tension d'alimentation contrôlée donnée, afin de comparer cette tension mémorisée à celle obtenue en sortie de la tête de mesure pour la même correction d'offset, mais une tension d'alimentation contrôlée différente.

7. Dispositif selon l'une des revendications 1 à 6 **caractérisé par le fait que** les moyens de correction d'offset (60) comprennent un condensateur (62) alimenté par une tension Vo réglable.

8. Dispositif selon l'une des revendications 3 à 7,
**caractérisé par le fait qu'**il comprend plusieurs cycles C1, comportant chacun un couple de deux séquences (T1, T2) pour un étalonnage de la correction d'offset avant un cycle C2 de mesure.

9. Dispositif selon l'une des revendications 3 à 8, prise en combinaison avec la revendication 3, **caractérisé par le fait qu'**il comprend plusieurs cycles de mesure C2, consécutifs à un cycle C1 d'étalonnage de la correction d'offset.

10. Dispositif selon l'une des revendication 3 à 9 prise en combinaison avec la revendication 3, **caractérisé par le fait que** chaque cycle C1 d'étalonnage de correction d'offset et chaque cycle C2 de mesure comprend au moins une suite de deux séquences (T1, T2).

11. Dispositif selon l'une des revendication 1 à 10 **caractérisé par le fait que** l'un au moins de la sonde de mesure (10) ou de l'élément de référence (20) a une géométrie en « U ».

**12.** Dispositif selon la revendication 11, **caractérisé par le fait que** la sonde de mesure (10) a une géométrie en « U ».

**13.** Dispositif selon la revendication 11, **caractérisé par le fait que** l'élément de référence (20) a une géométrie en « U »

**14.** Dispositif selon l'une des revendications 11 à 13 **caractérisé par le fait qu'**il comprend un élément de référence (20) commun à plusieurs sondes de mesure.

**15.** Dispositif selon la revendication 14, **caractérisé par le fait qu'**il comprend un élément de référence (20) en peigne.

**16.** Dispositif selon l'une des revendications précédentes, **caractérisé par le fait qu'**il comprend en outre des moyens aptes à asservir la correction d'offset sur le signal de sortie de l'étage intégrateur.

**17.** Dispositif selon la revendication 16 prise en combinaison avec la revendication 3, **caractérisé par le fait que** les moyens d'asservissement (C(z)) possèdent une fonction de transfert en C52/Co, C52 désignant le condensateur d'intégration, tandis que Co désigne le condensateur utilisé pour la tension de correction d'offset.

**18.** Dispositif selon l'une des revendications précédentes **caractérisé par le fait qu'**il comprend des moyens aptes à placer successivement en circuit sur l'entrée de l'étage intégrateur, des sondes respectives différentes (10.1, 10.n).

**19.** Dispositif selon la revendication 18, **caractérisé par le fait qu'**il comprend un réseau d'interrupteurs (80.1, 80.n) conçus pour assurer la liaison successive des sondes sur l'entrée de l'étage intégrateur (50).

**20.** Dispositif selon l'une des revendications 18 ou 19, **caractérisé par le fait qu'**il comprend des moyens aptes à définir un cadencement comprenant une première période (Pe1) comprenant une suite de n paires de deux séquences (T1, T2) d'étalonnage, pendant lesquelles les moyens d'analyse recherchent la tension de correction d'offset (VO), pour chacune des sondes de mesure (10) et une deuxième période (Pe2) comprenant également une suite de n paires de deux séquences (T1, T2) de mesure respectivement pour chaque sonde de mesure (10).

**21.** Dispositif selon l'une des revendications précédentes, **caractérisé par le fait qu'**il comprend des moyens aptes à placer successivement en circuit sur l'entrée de l'étage intégrateur, n sondes respectives différentes (10.1, 10.n) et des moyens aptes à définir un cadencement comprenant une première période (Pe1) comprenant une suite de n paires de deux séquences (T1, T2) d'étalonnage, pendant lesquelles les moyens d'analyse recherchent la tension de correction d'offset (V0), pour chacune des sondes de mesure (10) et une deuxième période (Pe2) comprenant également une suite de n paires de deux séquences (T1, T2) de mesure respectivement pour chaque sonde de mesure (10), pendant la deuxième période, un étage différenciateur (70) recevant sur ses entrées respectives deux signaux représentatifs d'une sortie de tête de mesure pour une correction d'offset similaire, mais des tensions d'alimentation contrôlée différentes.

**22.** Dispositif selon l'une des revendications 20 ou 21, **caractérisé par le fait que** au cours de chaque paire de deux séquences successives, respectivement une tension contrôlée est appliquée à une sonde de mesure (10), puis la sonde de mesure (10) est reliée à l'entrée de l'étage intégrateur (50).

**23.** Dispositif selon l'une des revendications précédentes, **caractérisé par le fait que** les moyens d'alimentation électrique (30) sont adaptés pour appliquer sur la sonde de mesure (10) des tensions successives variables contrôlées (E1, E2 ...) et que le dispositif comprend en outre des moyens d'analyse de l'évolution des signaux en sortie de l'étage intégrateur en fonction des tensions d'alimentation appliquées.

**24.** Dispositif selon l'une des revendications précédentes **caractérisé par le fait que** l'élément de référence est formé d'une sonde de référence (20).

**25.** Dispositif selon l'une des revendications précédentes, **caractérisé par le fait que** l'élément de référence (20) est formé d'une masse constituée par exemple par la terre ou une masse métallique avoisinante, par exemple le chassis d'un véhicule automobile.

**26.** Dispositif selon la revendication 23, **caractérisé par le fait que** les incréments de tension d'alimentation sont constants.

**27.** Dispositif selon l'une des revendications 23 ou 26, **caractérisé par le fait que** les incréments de tension sont de l'ordre de 1volt.

**28.** Dispositif selon l'une des revendications 23, 26 ou 27, **caractérisé par le fait que** les moyens d'alimentation électrique sont adaptés pour appliquer successivement sur la sonde de mesure (10), au moins deux séries de tensions respectivement de faible valeur et de forte valeur.

**29.** Dispositif selon l'une des revendications 23, 26 à 28, **caractérisé par le fait que** les moyens d'alimentation électrique sont adaptés pour appliquer successivement sur la sonde de mesure (10) au moins deux tensions E1 et E2 de faible valeur pour une détection en mode proximal et deux tensions E3 et E4 de forte valeur pour une détection en mode lointain.

**30.** Dispositif selon la revendication précédente **caractérisé par le fait que** les moyens d'analyse sont adaptés pour calculer une capacité virtuelle en mode lointain Csloi, proportionnelle à K1 = (Vs4 - Vs3) / (E4 - E3) et une capacité virtuelle en mode proximal Cspro, proportionnelle à K2 = (Vs2-Vs1) / (E2 - E1), relations dans lesquelles Vsn désigne la tension obtenue en sortie de l'étage intégrateur pour une tension d'alimentation En.

**31.** Dispositif selon l'une des revendications 23, 26 à 30, **caractérisé par le fait que** les moyens d'analyse sont adaptés pour corriger une valeur Csloi obtenue en mode lointain avec des tensions de forte valeur, sur la base d'une valeur Cspro obtenue en mode proximal pour des tensions de faible valeur.

**32.** Dispositif selon l'une des revendications 30 ou 31, **caractérisé par le fait que** les moyens d'analyse sont adaptés pour calculer le rapport K1/K2, et si ce rapport est supérieur à 1, calculer une valeur corrigée de la capacité virtuelle en mode lointain Csloi, soit Csloimod sur la base de la relation :

$$Csloimod = Csloi \cdot K = Csloi \cdot (K1/K2).$$

**33.** Dispositif selon l'une des revendications 23, 26 à 32, **caractérisé par le fait qu'**il comprend des moyens aptes à contrôler un fonctionnement sous forme de cycles successifs au cours desquels, d'un cycle à l'autre, la tension appliquée sur la sonde de mesure (10) évolue de manière contrôlée, chaque cycle étant divisé en deux séquences successives (T1, T2) au cours desquels respectivement la tension contrôlée est appliquée à la sonde de mesure (10), puis la sonde de mesure (10) est reliée à l'entrée de l'étage intégrateur (50).

**Claims**

**1.** Measurement device, utilizing an indirect measurement of permittivity between two electrically conducting bodies (10, 20), comprising at least two measurement heads, each one including at least one measurement probe (10) and at least one reference element (20), the device comprising means (30) able sequentially to apply a controlled supply voltage between the measurement probe (10) and the reference element (20) and means (50) able to integrate the electric charge accumulated on the measurement probe (10), **characterized in that** it furthermore comprises means (60) able to apply an adjustable electric charge (Q0) to the input of the integrator means (50) and a differentiator stage (70) receiving on its respective inputs signals representative of the respective measurement head outputs (Vs1, Vs2), for an application of a similar electric charge (Q0) to the input of their respective integration means (50), but different controlled supply voltages between the measurement probe (10) and the reference element (20).

**2.** Device according to Claim 1, **characterized in that** it comprises two electrically conducting bodies respectively constituting a measurement probe (10) and a reference element (20), electrical supply means (30) able to deliver a DC electric voltage of controlled amplitude, an integrator stage (50) comprising a capacitance switching system (53) and operating means (40) suitable for defining cyclically, at a controlled frequency, a set of two sequences (T1, T2): a first sequence in the course of which the electrical supply means (30) are linked to the measurement probe (10) so as to apply an electric field between the measurement probe (10) and the reference element (20) and accumulate electric charge on the measurement probe (10), then a second sequence in the course of which the electrical supply means (30) are disconnected from the measurement probe (10) and the latter is linked to a summation point of the integrator stage (50) so as to transfer charge into the integrator stage (50) and obtain at the output of the latter a signal representative of the permittivity existing between the measurement probe (10) and the reference element (20), the integrator stage (50) furthermore comprising an operational amplifier (51), a first integration capacitor (52) arranged in feedback mode with this amplifier (51) and a second capacitor (53) switched between the output and the input of the operational amplifier (51) at the tempo of the sequences (T1, T2) driven by operating means (40), so that in the steady balance state, there is obtained at the output of the operational amplifier (51), a voltage "Vs balance" equal to:

- ECs/C53, in which relation -E designates the amplitude of the voltage across the terminals of the electrical supply means (30), and Cs and C53 respectively designate the values of the capacitances defined between the measurement probe (10) and the reference element on the one hand and the second switched capacitor (53) on the other hand.

3. Device according to one of Claims 1 or 2, **characterized in that** it comprises two measurement heads (TE1 and TE2), and the signals applied to the differential stage (70) originate respectively from the output of the integrator stages (50) of these two measurement heads.

4. Device according to Claim 3, **characterized in that** the two measurement probes are in tight proximity and placed in the same medium.

5. Device according to one of Claims 3 or 4, **characterized in that** it comprises a controller able to apply a cyclic manner of operation comprising two successive cycles: a first cycle in the course of which the two measurement heads receive similar supply voltages Vf and the offset voltage is corrected, and a second cycle in the course of which the supply voltage on one of the measurement heads TE1 is modified, while the supply voltage on the second measurement head TE2 and the offset voltages previously obtained are maintained.

6. Device according to one of Claims 1 to 3, **characterized in that** it comprises a single measurement head and means able to store the output signal from the measurement head for an offset correction and a given controlled supply voltage, so as to compare this stored voltage with that obtained at the output of the measurement head for the same offset correction, but a different controlled supply voltage.

7. Device according to one of Claims 1 to 6, **characterized in that** the offset correction means (60) comprise a capacitor (62) supplied via an adjustable voltage Vo.

8. Device according to one of Claims 3 to 7, **characterized in that** it comprises several cycles C1, each comprising a pair of two sequences (T1, T2) for a calibration of the offset correction before a measurement cycle C2.

9. Device according to one of Claims 3 to 8, taken in combination with Claim 3, **characterized in that** it comprises several measurement cycles C2, consecutive with a cycle C1 for calibrating the offset correction.

10. Device according to one of Claims 3 to 9, taken in combination with Claim 3, **characterized in that** each offset correction calibration cycle C1 and each measurement cycle C2 comprises at least one set of two sequences (T1, T2).

11. Device according to one of Claims 1 to 10, **characterized in that** one at least of the measurement probe (10) or of the reference element (20) has a "U" geometry.

12. Device according to Claim 11, **characterized in that** the measurement probe (10) has a "U" geometry.

13. Device according to Claim 11, **characterized in that** the reference element (20) has a "U" geometry.

14. Device according to one of Claims 11 to 13, **characterized in that** it comprises a reference element (20) common to several measurement probes.

15. Device according to Claim 14, **characterized in that** it comprises a comb reference element (20).

16. Device according to one of the preceding claims, **characterized in that** it furthermore comprises means able to slave the offset correction to the output signal from the integrator stage.

17. Device according to Claim 16 taken in combination with Claim 3, **characterized in that** the slaving means (C(z)) possess a C52/Co transfer function, C52 designating the integration capacitor, while Co designates the capacitor used for the offset correction voltage.

18. Device according to one of the preceding claims, **characterized in that** it comprises means able to place different respective probes (10.1, 10.n) successively in circuit on the input of the integrator stage.

19. Device according to Claim 18, **characterized in that** it comprises a network of on/off switches (80.1, 80.n) which are designed to provide the successive linking of the probes to the input of the integrator stage (50).

20. Device according to one of Claims 18 or 19, **characterized in that** it comprises means able to define a tick rate comprising a first period (Pe1) comprising a set of n pairs of two calibration sequences (T1, T2), during which the analysis means search for the offset correction voltage (V0), for each of the measurement probes (10) and a second period (Pe2) also comprising a set of n pairs of two measurement sequences (T1, T2) respectively for each measurement probe (10).

21. Device according to one of the preceding claims, **characterized in that** it comprises means able to place n different respective probes (10.1, 10.n) successively in circuit on the input of the integrator stage, and means able to define a tick rate comprising a first period (Pe1) comprising a set of n pairs of two calibration sequences (T1, T2), during which the analysis means search for the offset correction voltage (V0), for each of the measurement probes (10) and a second period (Pe2) also comprising a set of n pairs of two measurement sequences (T1, T2) respectively for each measurement probe (10), during the second period, a differentiator stage (70) receiving on its respective inputs two signals representative of a measurement head output for a similar offset correction, but different controlled supply voltages.

22. Device according to one of Claims 20 or 21, **characterized in that** in the course of each pair of two successive sequences, respectively a controlled voltage is applied to a measurement probe (10), then the measurement probe (10) is linked to the input of the integrator stage (50).

23. Device according to one of the preceding claims, **characterized in that** the electrical supply means (30) are suitable for applying successive controlled variable voltages (E1, E2 ...) to the measurement probe (10) and that the device furthermore comprises means for analyzing the trend of the signals at the output of the integrator stage as a function of the supply voltages applied.

24. Device according to one of the preceding claims, **characterized in that** the reference element is formed of a reference probe (20).

25. Device according to one of the preceding claims, **characterized in that** the reference element (20) is formed of a mass consisting for example of the earth or a neighboring metal mass, for example the chassis of a motor vehicle.

26. Device according to Claim 23, **characterized in that** the supply voltage increments are constant.

27. Device according to one of Claims 23 or 26, **characterized in that** the voltage increments are of the order of 1 volt.

28. Device according to one of Claims 23, 26 or 27, **characterized in that** the electrical supply means are suitable for applying at least two series of voltages of respectively low value and high value successively to the measurement probe (10).

29. Device according to one of Claims 23, 26 to 28, **characterized in that** the electrical supply means are suitable for applying successively to the measurement probe (10) at least two voltages E1 and E2 of low value for a detection in near mode and two voltages E3 and E4 of high value for a detection in far mode.

30. Device according to the preceding claim, **characterized in that** the means of analysis are suitable for calculating a virtual capacitance in far mode Csfar, proportional to $K1 = (Vs4 - Vs3)/(E4 - E3)$ and a virtual capacitance in near mode Csnear, proportional to $K2 = (Vs2 - Vs1)/(E2 - E1)$, in which relations Vsn designates the voltage obtained at the output of the integrator stage for a supply voltage En.

31. Device according to one of Claims 23, 26 to 30, **characterized in that** the analysis means are suitable for correcting a value Csfar obtained in far mode with voltages of high value, on the basis of a value Csnear obtained in near mode for voltages of low value.

**32.** Device according to one of Claims 30 or 31, **characterized in that** the analysis means are suitable for calculating the ratio K1/K2, and if this ratio is greater than 1, calculating a corrected value of the virtual capacitance in far mode Csfar, i.e. Csfarmod on the basis of the relation:

$$\texttt{Csfarmod = Csfar.K = Csfar.(K1/K2).}$$

**33.** Device according to one of Claims 23, 26 to 32, **characterized in that** it comprises means able to control a manner of operation in the form of successive cycles in the course of which, from one cycle to another, the voltage applied to the measurement probe (10) alters in a controlled manner, each cycle being divided into two successive sequences (T1, T2) in the course of which respectively the controlled voltage is applied to the measurement probe (10), then the measurement probe (10) is linked to the input of the integrator stage (50).

**Patentansprüche**

**1.** Messvorrichtung, die eine indirekte Messung der Permittivität zwischen zwei elektrisch leitenden Körpern (10, 20) ausnutzt und die wenigstens zwei Messköpfe umfasst, von denen jeder wenigstens eine Messsonde (10) und wenigstens ein Referenzelement (20) umfasst, wobei die Vorrichtung Mittel (30), die dafür geeignet sind, sequenziell eine kontrollierte Versorgungsspannung zwischen der Messsonde (10) und dem Referenzelement (20) anzulegen, und Mittel (50), die dafür geeignet sind, die auf der Messsonde (10) angesammelten elektrischen Ladungen aufzuintegrieren, umfasst, **dadurch gekennzeichnet, dass** sie außerdem folgendes umfasst: Mittel (60), die dafür geeignet sind, auf den Eingang der Integratormittel (50) eine einstellbare elektrische Ladung (Q0) zu geben, sowie eine Differenzenstufe (70), auf deren jeweilige Eingänge Signale gegeben werden, die die jeweiligen Ausgänge (Vs1, Vs2) der Messköpfe, für eine Anwendung einer gleichartigen elektrischen Ladung (Q0) auf den Eingang ihrer jeweiligen Integrationsmittel (50), jedoch verschiedene kontrollierte Versorgungsspannungen zwischen der Messsonde (10) und dem Referenzelement (20), repräsentieren.

**2.** Vorrichtung nach Anspruch 1, **dadurch gekennzeichnet, dass** sie folgendes umfasst: zwei elektrisch leitende Körper, die eine Messsonde (10) bzw. ein Referenzelement (20) bilden, Mittel zur elektrischen Versorgung (30), die dafür geeignet sind, eine elektrische Gleichspannung mit kontrollierter Amplitude zu liefern, eine Integratorstufe (50), die folgendes umfasst: ein System zur Umschaltung einer Kapazität (53) und Steuerungsmittel (40), die dafür eingerichtet sind, mit einer kontrollierten Frequenz zyklisch eine Folge von zwei Sequenzen (T1, T2) zu erzeugen: eine erste Sequenz, in deren Verlauf die Mittel zur elektrischen Versorgung (30) mit der Messsonde (10) verbunden werden, um zwischen der Messsonde (10) und dem Referenzelement (20) ein elektrisches Feld anzulegen und auf der Messsonde (10) elektrische Ladungen zu sammeln, danach eine zweite Sequenz, in deren Verlauf die Mittel zur elektrischen Versorgung (30) von der Messsonde (10) abgeklemmt werden und diese mit einem Summationspunkt der Integratorstufe (50) verbunden wird, um Ladungen in die Integratorstufe (50) zu übertragen und an deren Ausgang ein Signal zu erhalten, dass die Permittivität repräsentiert, die zwischen der Messsonde (10) und dem Referenzelement (20) vorhanden ist, wobei die Integratorstufe (50) außerdem folgendes umfasst: einen Operationsverstärker (51), einen ersten Kondensator zur Integration (52), der in Gegenkopplung zu diesem Verstärker (51) geschaltet ist, und einen zweiten Kondensator (53), der zwischen dem Ausgang und dem Eingang des Operationsverstärkers (51) umgeschaltet wird, und dies im Takt der Sequenzen (T1, T2), die von den Steuerungsmitteln (40) so gesteuert werden, dass im eingenommenen Gleichgewichtsbetrieb, am Ausgang des Operationsverstärkers (51) eine Spannung "Vs Gleichgewicht" erhalten wird, die gleich folgendem ist:

- E.Cs/C53, wobei in dieser Beziehung -E die Amplitude der Spannung an den Klemmen der Mittel zur elektrischen Versorgung (30) bezeichnet und Cs bzw. C53 die Werte der Kapazitäten bezeichnen, die zwischen der Messsonde (10) und dem Referenzelement zum einen und durch den umgeschalteten zweiten Kondensator (53) zum anderen definiert sind.

**3.** Vorrichtung nach einem der Ansprüche 1 oder 2, **dadurch gekennzeichnet, dass** sie zwei Messköpfe (TE1 und TE2) umfasst und die Signale, die auf die Differenzenstufe (70) gegeben werden, jeweils vom Ausgang der Integratorstufen (50) dieser beiden Messköpfe kommen.

**4.** Vorrichtung nach Anspruch 3, **dadurch gekennzeichnet, dass** die beiden Messsonden sich in enger Nachbarschaft befinden und in derselben Umgebung angeordnet sind.

**5.** Vorrichtung nach einem der Ansprüche 3 oder 4, **dadurch gekennzeichnet, dass** sie einen Kontroller umfasst, der dafür geeignet ist, einen zyklischen Betrieb durchzuführen, der zwei aufeinanderfolgende Zyklen umfasst: einen ersten Zyklus, in dessen Verlauf die beiden Messköpfe gleichartige Versorgungsspannungen Vf erhalten und die Offsetspannung korrigiert wird, und einen zweiten Zyklus, in dessen Verlauf die Versorgungsspannung für einen der Messköpfe TE1 verändert wird, wohingegen die Versorgungsspannung für den zweiten Messkopf TE2 und die zuvor erhaltenen Offsetspannungen beibehalten werden.

**6.** Vorrichtung nach einem der Ansprüche 1 bis 3, **dadurch gekennzeichnet, dass** sie einen einzigen Messkopf umfasst sowie Mittel, die dafür geeignet sind, das Ausgangssignal des Messkopfs für eine gegebene Offsetkorrektur und kontrollierte Versorgungsspannung zu speichern, um diese gespeicherte Spannung mit derjenigen zu vergleichen, die am Ausgang des Messkopfs für dieselbe Offsetkorrektur, jedoch eine verschiedene kontrollierte Versorgungsspannung erhalten wird.

**7.** Vorrichtung nach einem der Ansprüche 1 bis 6, **dadurch gekennzeichnet, dass** Mittel zur Offsetkorrektur (60) einen Kondensator (62) umfassen, der durch eine einstellbare Spannung Vo versorgt wird.

**8.** Vorrichtung nach einem der Ansprüche 3 bis 7, **dadurch gekennzeichnet, dass** sie vor einem Messzyklus C2 mehrere Zyklen C1 umfasst, von denen jeder ein Paar von zwei Sequenzen (T1, T2) für eine Eichung der Offsetkorrektur umfasst.

**9.** Vorrichtung nach einem der Ansprüche 3 bis 8 in Kombination mit Anspruch 3, **dadurch gekennzeichnet, dass** sie mehrere Messzyklen C2 im Anschluss an einen Zyklus C1 zur Eichung der Offsetkorrektur umfasst.

**10.** Vorrichtung nach einem der Ansprüche 3 bis 9 in Kombination mit Anspruch 3, **dadurch gekennzeichnet, dass** jeder Zyklus C1 zur Eichung der Offsetkorrektur und jeder Messzyklus C2 wenigstens eine Folge von zwei Sequenzen (T1, T2) umfasst.

**11.** Vorrichtung nach einem der Ansprüche 1 bis 10, **dadurch gekennzeichnet, dass** wenigstens eines von der Messsonde (10) und dem Referenzelement (20) "U"-förmig ist.

**12.** Vorrichtung nach Anspruch 11, **dadurch gekennzeichnet, dass** die Messsonde (10) "U"-förmig ist.

**13.** Vorrichtung nach Anspruch 11, **dadurch gekennzeichnet, dass** das Referenzelement (20) "U"-förmig ist.

**14.** Vorrichtung nach einem der Ansprüche 11 bis 13, **dadurch gekennzeichnet, dass** sie ein Referenzelement (20) umfasst, das mehreren Messsonden gemeinsam ist.

**15.** Vorrichtung nach Anspruch 14, **dadurch gekennzeichnet, dass** sie ein kammförmiges Referenzelement (20) umfasst.

**16.** Vorrichtung nach einem der vorhergehenden Ansprüche, **dadurch gekennzeichnet, dass** sie außerdem Mittel umfasst, die dafür eingerichtet sind, die Offsetkorrektur über das Ausgangssignal der Integratorstufe in einem Regelkreis zu steuern.

**17.** Vorrichtung nach Anspruch 16 in Kombination mit Anspruch 3, **dadurch gekennzeichnet, dass** die Regelungsmittel (C(z)) eine Übertragungsfunktion von C52/Co haben, wobei C52 den Integrationskondensator bezeichnet, wohingegen Co den Kondensator bezeichnet, der für die Offsetkorrekturspannung verwendet wird.

**18.** Vorrichtung nach einem der vorhergehenden Ansprüche, **dadurch gekennzeichnet, dass** sie Mittel umfasst, die dafür geeignet sind, aufeinanderfolgend jeweils verschiedene Sonden (10.1, 10.n) auf den Eingang der Integratorstufe zu schalten.

**19.** Vorrichtung nach Anspruch 18, **dadurch gekennzeichnet, dass** sie ein Netzwerk von Schaltern (80.1, 80.n) umfasst, die dafür konzipiert sind, die aufeinanderfolgende Verbindung der Sonden mit dem Eingang der Integratorstufe (50) bereitzustellen.

**20.** Vorrichtung nach einem der Ansprüche 18 oder 19, **dadurch gekennzeichnet, dass** sie Mittel umfasst, die dafür geeignet sind, eine Taktfolge zu definieren, die eine erste Periode (Pe1) umfasst, die eine Folge von n Paaren von zwei Eichungssequenzen (T1, T2) umfasst, während der die Analysemittel für jede der Messsonden (10) die Offsetkorrekturspannung (V0) bestimmen, und eine zweite Periode (Pe2) umfasst, die ebenfalls eine Folge von n Paaren von zwei Messsequenzen (T1, T2) jeweils für jede der Messsonden (10) umfasst.

21. Vorrichtung nach einem der vorhergehenden Ansprüche, **dadurch gekennzeichnet, dass** sie Mittel umfasst, die dafür geeignet sind, aufeinanderfolgend n jeweils verschiedene Sonden (10.1, 10.n) auf den Eingang der Integratorstufe zu schalten, sowie Mittel, die dafür geeignet sind, eine Taktfolge zu definieren, die eine erste Periode (Pe1) umfasst, die eine Folge von n Paaren von zwei Eichungssequenzen (T1, T2) umfasst, während der die Analysemittel für jede der Messsonden (10) die Offsetkorrekturspannung (V0) bestimmen, und eine zweite Periode (Pe2) umfasst, die ebenfalls eine Folge von n Paaren von zwei Messsequenzen (T1, T2) jeweils für jede der Messsonden (10) umfasst, wobei während der zweiten Periode eine Differenzstufe (70) auf ihren jeweiligen Eingängen zwei Signale empfängt, die repräsentativ für eine Messkopfausgabe für eine gleichartige Offsetkorrektur jedoch verschiedene kontrollierte versorgungsspannungen sind.

22. Vorrichtung nach einem der Ansprüche 20 oder 21, **dadurch gekennzeichnet, dass** im Verlauf jedes Paares von zwei aufeinanderfolgenden Sequenzen jeweils eine kontrollierte Spannung auf eine Messsonde (10) gegeben wird und dann die Messsonde (10) mit dem Eingang der Integratorstufe (50) verbunden wird.

23. Vorrichtung nach einem der vorhergehenden Ansprüche, **dadurch gekennzeichnet, dass** die Mittel zur elektrischen Versorgung (30) dafür eingerichtet sind, auf die Messsonde (10) aufeinanderfolgende kontrollierte variable Spannungen (E1, E2, ...) zu geben, und dass die Vorrichtung außerdem Mittel zur Analyse der Veränderung der Signale am Ausgang der Integratorstufe in Abhängigkeit von den angelegten Versorgungsspannungen umfasst.

24. Vorrichtung nach einem der vorhergehenden Ansprüche, **dadurch gekennzeichnet, dass** das Referenzelement durch eine Referenzsonde (20) gebildet wird.

25. Vorrichtung nach einem der vorhergehenden Ansprüche, **dadurch gekennzeichnet, dass** das Referenzelement (20) durch eine Masse gebildet wird, die beispielsweise durch die Erde oder eine benachbarte metallische Masse, beispielsweise das Chassis eines Kraftfahrzeugs, gebildet wird.

26. Vorrichtung nach Anspruch 23, **dadurch gekennzeichnet, dass** die Inkremente der Versorgungsspannung konstant sind.

27. Vorrichtung nach einem der Ansprüche 23 oder 26, **dadurch gekennzeichnet, dass** die Inkremente der Versorgungsspannung in der Größenordnung von 1 Volt liegen.

28. Vorrichtung nach einem der Ansprüche 23, 26 oder 27, **dadurch gekennzeichnet, dass** die Mittel zur elektrischen Versorgung dafür eingerichtet sind, auf die Messsonde (10) aufeinanderfolgend wenigstens zwei Spannungsreihen mit niedrigem Wert bzw. hohem Wert zu geben.

29. Vorrichtung nach einem der Ansprüche 23, 26 bis 28, **dadurch gekennzeichnet, dass** die Mittel zur elektrischen Versorgung dafür eingerichtet sind, auf die Messsonde (10) aufeinanderfolgend wenigstens zwei Spannungen E1 und E2 mit niedrigem Wert für eine Detektion im Nahmodus zu geben und zwei Spannungen E3 und E4 mit hohem Wert für eine Detektion im Fernmodus zu geben.

30. Vorrichtung nach dem vorhergehenden Anspruch, **dadurch gekennzeichnet, dass** die Analysemittel dafür eingereichtet sind, eine virtuelle Kapazität im Fernmodus Csloi zu berechnen, die proportional zu $K1 = (Vs4 - Vs3) / (E4 - E3)$ ist, und eine virtuelle Kapazität im Nahmodus Cspro zu berechnen, die proportional zu $K2 = (Vs2 - Vs1) / (E2 - E1)$ ist, wobei in diesen Beziehungen Vsn die Spannung bezeichnet, die für eine Versorgungsspannung En am Ausgang der Integratorstufe erhalten wird.

31. Vorrichtung nach einem der Ansprüche 23, 26 bis 30, **dadurch gekennzeichnet, dass** die Analysemittel dafür eingereichtet sind, einen Wert Csloi zu korrigieren, der im Fernmodus mit Spannungen von hohem Wert erhaltenen wurde, und dies auf der Basis eines Werts Cspro, der im Nahmodus für Spannungen mit niedrigem Wert erhalten wurde.

32. Vorrichtung nach einem der Ansprüche 30 oder 31, **dadurch gekennzeichnet, dass** die Analysemittel dafür eingereichtet sind, das Verhältnis K1/K2 zu berechnen und falls dieses Verhältnis größer als 1 ist, einen korrigierten Wert der virtuellen Kapazität im Fernmodus Csloi, nämlich Csloimod, zu berechnen, und dies auf der Basis der folgenden Beziehung:

$$Csloimod = Csloi.K = Csloi.(K1/K2).$$

33. Vorrichtung nach einem der Ansprüche 23, 26 bis 32, **dadurch gekennzeichnet, dass** sie Mittel umfasst, die dafür geeignet sind, einen Betrieb in Form von aufeinanderfolgenden Zyklen zu steuern, in deren Verlauf, von einem Zyklus zum anderen, die auf die Messsonde (10) gegebene Spannung sich auf kontrollierte Weise verändert, wobei jeder Zyklus in zwei aufeinanderfolgende Sequenzen (T1, T2) aufgeteilt ist, in deren Verlauf jeweils die kontrollierte Spannung auf die Messsonde (10) gegeben wird und dann die Messsonde (10) mit dem Eingang der Integratorstufe (50) verbunden wird.

# FIG.1

## ETAT DE LA TECHNIQUE

EP 1 336 082 B1

FIG. 2

21

FIG.3

30

Générateur séquentiel
champs variables

Compensation
offset

60

TE 1
(10,20,50)

Sonde de mesure

Cso 1
offset
sonde 1

P

TETE DE MESURE

VS1

41

Séquenceur

70

VS

Echantillonneur
bloqueur

CAN
Micro

72

74

Vers utilisation

2ème sonde de mesure

Cso 2
offset
sonde 2

TE 2
(10,20,50)

TETE DE MESURE
DE REFERENCE

VS2

Générateur champ fixe
de référence

Compensation
offset

30

60

EP 1 336 082 B1

## FIG_4

|  | Cycle C1 étalonnage de la correction d'offset | | Cycle C2 Mesure | |
|  | Séquence T1 | Séquence T2 | Séquence T1 | Séquence T2 |
|---|---|---|---|---|
| Tête TE1 | Eo ; Vo | Eo ; Vo1 tel que Vs1 ≃ 0 | E1 ; Vo1 | E1 ; Vo1 Vs1 |
| Tête TE2 | Eo ; Vo | Eo; Vo2 tel que Vs2 ≃ 0 | Eo ; Vo2 | E0 ; Vo2 Vs2 |
|  |  |  |  | Vs = Vs2 −Vs1 |

## FIG_5

| Cycle C1 étalonnage de la correction d'offset | | Cycle C2 Mesure | |
| Séquence T1 | Séquence T2 | Séquence T1 | Séquence T2 |
|---|---|---|---|
| Eo ; Vo | Eo ; Vo1 tel que Vs1 ≃ 0 Mémorisation de Vs1 | E1 ; Vo1 | E1 ; Vo1 Obtention de Vs2 |
|  |  |  | Vs = Vs2 −Vs1 |

## FIG_6

C (z) — 92

90

Vo → ⊗ (−/+) → Vo' → H (z) — 96

10, 30, 50

Vf → G (z) (tête de mesure) → ⊗ (−/+) — 94 → Vs (z)

## FIG_7

## FIG_8

## FIG_9

## FIG. 10

## FIG. 11

EP 1 336 082 B1

FIG.12

FIG.13

26

# FIG_14

## FIG.15

E1 E2 ε1,d1    E3

TETE DE MESURE

30,40,50

20  10    ε2,d2    ε3,d3

## FIG.16

T1  T2

0V
E1
E2
E3
E4

En

## FIG.17

VS

VS4
VS3
VS2
VS1

E1 E2  E3  E4    E

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0025098 A
- FR 2785046
- WO 0005593 A

**Littérature non-brevet citée dans la description**

- tomographic imaging of two-component flow using capacitance sensors. **HUANG SM.** J. of Physics E. Scientific Instruments. IOP Publishing, 01 Mars 1989, vol. 22, 173-177